# EUROPÄISCHE PATENTANMELDUNG

(11) **EP 3 100 603 A1**
(43) Veröffentlichungstag der Anmeldung: **07.12.2016**
(21) Anmeldenummer: 16171227.8
(22) Anmeldetag: 25.05.2016
(51) Int. Cl.: A01C 7/10, A01C 7/08

(54) **VERFAHREN UND VORRICHTUNG ZUM DOSIEREN UND AUSBRINGEN VON KÖRNIGEM GUT**

(30) Priorität: 02.06.2015 DE 102015210212
(71) Anmelder: Horsch Maschinen GmbH, 92421 Schwandorf (DE)
(72) Erfinder: Dr. ROTHMUND, Matthias, 92421 Schwandorf (DE)
(74) Vertreter: Benninger, Johannes

(57) **Zusammenfassung**

Es sind ein Verfahren (2) und eine Vorrichtung zum Ausbringen von körnigem Gut offenbart. Im Rahmen des Verfahrens wird mindestens eine Dosiereinheit (22) drehend angetrieben, welche hieraus resultierend körniges Gut dosiert. Weiter wird ein Luftstrom durch mindestens eine Strömungserzeugungseinrichtung (14) bereitgestellt, mittels welches Luftstroms dosiertes körniges Gut an wenigstens einen Sensor (32) weitergeleitet wird, der Körner des dosierten Gutes zählt. Zudem wird das dosierte und gezählte körnige Gut ausgebracht. Eine Zeitdifferenz (Δt), welche körniges Gut unmittelbar nach seiner Dosierung zur Weiterleitung an den wenigstens einen Sensor (32) benötigt, wird festgestellt und/oder gemessen. Eine Drehzahl der mindestens einen Dosiereinheit (22) und/oder ein Volumen des über die mindestens eine Strömungserzeugungseinrichtung (14) bereitzustellenden Luftstroms werden unter Berücksichtigung der Zeitdifferenz (Δt) automatisch geregelt.

## Beschreibung

Die vorliegende Erfindung betrifft ein Verfahren zum Dosieren und Ausbringen von körnigem Gut mit den Merkmalen des unabhängigen Verfahrensanspruchs 1. Zudem betrifft die Erfindung eine Vorrichtung zum Dosieren und Ausbringen von körnigem Gut mit den Merkmalen des unabhängigen Anspruchs 9.

Im landwirtschaftlichen Bereich kommen in der Praxis häufig Verteilvorrichtungen zum Einsatz, um Saatgut zu vereinzeln und und/oder volumetrisch zu dosieren und auf einem Feld auszubringen. Hierbei wird das Saatgut bzw. das körnige Gut aus einem Speicher entnommen, einer Dosiereinheit zugeführt und nach Dosierung mittels eines Luftvolumenstromes zu einem Austragungsorgan, insbesondere jedoch zu mehreren Austragungsorganen gefördert. Vor der Ausbringung kann das körnige Gut ggf. einen Verteiler passieren, der für eine Aufteilung auf eine Mehrzahl von Austragungsorganen sorgen kann. Um eine Querverteilung und einen Kornabstand bei einer Bewegung der Verteilvorrichtung über das Feld möglichst konstant zu halten, können zudem Sensoren vorgesehen sein, welche die Körner vor ihrer Ausbringung zählen. In Abhängigkeit von den gezählten Körnern können die Dosiereinheit und der Luftstrom sodann geregelt werden, um die Dosiereinheit und den Luftstrom bei Abweichung der gezählten Körner von einem bestimmten Soll-Wert mit höherer oder geringerer Drehzahl bzw. Geschwindigkeit anzusteuern.

Die Sensoren sind in der Praxis in einem Strömungspfad der einzelnen Körner angeordnet und ausreichend von der Dosiereinheit beabstandet, so dass die Körner vor ihrer Ausbringung den Sensor passieren. Die Regelung der Dosiereinheit erfolgt aus diesem Grunde ungenau bzw. nicht in Echtzeit, da die über die Dosiereinheit dosierten Körner den Sensor erst nach einer bestimmten Zeit erreichen. Die Praxis hat hierbei gezeigt, dass eine derartige Regelung auch mit einem Aufschaukeln des Reglers, d.h. mit ausgeprägten Überschwingerscheinungen einhergehen kann.

Eine vorrangige Aufgabe der Erfindung kann aus diesem Grunde darin gesehen werden, ein Verfahren und eine Vorrichtung zur Verfügung zu stellen, bei welcher eine Kornabgabe mit höherer Genauigkeit erfolgen kann. Zudem sollen bei der Regelung der Kornabstand und die Querverteilung nach Möglichkeit genau eingehalten werden können. Die Vorrichtung und das Verfahren sollen zudem einen einfachen Aufbau besitzen bzw. einfach umgesetzt werden können.

Diese Aufgaben werden durch ein Verfahren zum Ausbringen von körnigem Gut mit den Merkmalen des Anspruchs 1 und durch eine Vorrichtung zum Ausbringen von körnigem Gut mit den Merkmalen des Anspruchs 9 gelöst. Weitere vorteilhafte Ausführungsformen werden in den abhängigen Ansprüchen beschrieben.

Das Verfahren und die Vorrichtung, wie sie nachfolgend beschrieben werden, können gemäß der EP-Patentanmeldung mit der Anmeldenummer 14164868.3 ausgebildet sein bzw. für eine Vorrichtung gemäß EP-Patentanmeldung mit der Anmeldenummer 14164868.3 Verwendung finden. Die Offenbarung der EP-Patentanmeldung mit der Anmeldenummer 14164868.3 soll aus diesem Grunde vollständig in die vorliegende Beschreibung mit aufgenommen werden.

Die vorliegende Erfindung betrifft ein Verfahren zum Dosieren, Vereinzeln und zum Ausbringen von körnigem Gut. Wenn im vorliegenden Zusammenhang von körnigem Gut die Rede ist, so kann dies beispielsweise Saatgut oder Dünger oder dergleichen sein. Das Verfahren findet demzufolge insbesondere im Bereich der Landwirtschaft Anwendung und begründet insofern die gewerbliche Anwendbarkeit des erfindungsgemäßen Verfahrens. Das Verfahren umfasst zumindest die nachfolgend erläuterten Schritte; in einem ersten Schritt des Verfahrens wird mindestens eine Dosiereinheit rotierend angetrieben, welche hieraus resultierend körniges Gut bspw. volumetrisch dosiert. Die mindestens eine Dosiereinheit kann hierbei derart ausgebildet sein, dass diese in Abhängigkeit ihrer jeweiligen Drehfrequenz einen bestimmten Betrag an körnigem Gut je Zeiteinheit dosiert. Gegenüber einer niedrigen Drehfrequenz kann die mindestens eine Dosiereinheit daher bei hoher Drehfrequenz einen größeren Betrag an körnigem Gut je Zeiteinheit dosieren.

Weiter wird im Rahmen des Verfahrens ein Luftstrom durch mindestens eine Strömungserzeugungseinrichtung bereitgestellt, mittels welches Luftstroms dosiertes körniges Gut an wenigstens eine Sensoreinheit bzw. wenigstens einen Sensor weitergeleitet werden kann, der Körner des dosierten Gutes sensorisch erfasst, zählt und auf Basis dieser sensorischen Erfassung bzw. Kornzählung entsprechende Ausgangssignale generiert. Hinsichtlich einer sinnvollen Positionierung, Ausbildung und der Funktion des wenigstens einen Sensors sowie einer möglichen Anzahl an zu verwendenden Sensoren wird erneut auf die Offenbarung der EP-Patentanmeldung mit der Anmeldenummer 14164868.3 verwiesen.

In den mittels der wenigstens einen Strömungserzeugungseinrichtung erzeugten Luftstroms kann das dosierte körnige Gut abgegeben werden, wobei der Luftstrom das dosierte körnige Gut an den wenigstens einen Sensor und ggf. an einen Verteiler und/oder an ein oder mehrere Austragungsorgane weiterleitet. Die mindestens eine Strömungserzeugungseinrichtung kann beispielsweise ein Radialgebläse und/oder weitere Gebläse aufweisen. Der Luftstrom bildet somit das Trägermedium für das zu dosierende und auszubringende körnige Gut.

Der wenigstens eine Sensor kann beispielsweise als Prallsensor ausgebildet sein, auf welchen die Körner des Gutes auftreffen, um hierbei durch den wenigstens einen Sensor gezählt zu werden. Insbesondere haben sich Ausführungsformen bewährt, bei welchen die Körner des dosierten Gutes durch einen Luftstrom ausgehend von der wenigstens einen Dosiereinheit in Richtung eines Verteilers weitergeleitet und hierauf folgend zu ein oder mehreren Austragungsorganen weitertransportiert werden. Grundsätzlich kommen als Sensoren auch optische Erfassungseinrichtungen in Frage, deren Zuverlässigkeit jedoch aufgrund der in der Landwirtschaft herrschenden Bedingungen unvermeidlich unter der Staubanfälligkeit und der Verschmutzungsproblematik leidet. Aus diesem Grund sollten mechanisch arbeitende Sensoren, bspw. die genannten Prallsensoren, bevorzugt werden. Wenn die Prallsensoren an geeigneter Stelle in der Förderleitung angeordnet werden, bspw. im äußeren Bereich einer Umlenkung, kann sichergestellt werden, dass nahezu alle oder ausnahmslos alle die Umlenkung passierenden Körner dort auftreffen und entsprechende Sensorsignale bzw. Zählsignale auslösen.

In einem weiteren Schritt des erfindungsgemäßen Verfahrens wird das dosierte und gezählte körnige Gut ausgebracht. Hierbei können ein oder mehrere Verbindungsleitungen vorgesehen sein, die jeweils zu einzelnen Säscharen oder anderen bodennah angeordneten oder im Boden geführten Ausbringeinrichtungen bzw. Austragungsorganen für Körner des Gutes führen. Insbesondere kann das körnige Gut, wie vorhergehend bereits erwähnt, zunächst in einen zentralen Verteiler eintreten und von dort einzelnen Leitungen bzw. Verbindungen zugeführt werden, welche jeweils an wenigstens ein Austragungsorgan gekoppelt sind.

Auch kann es sein, dass Informationen zur Anzahl der über den wenigstens einen Sensor erfassten und gezählten Körner je Zeiteinheit generiert werden. Dies kann über eine nachfolgend noch beschriebene Steuerungseinrichtung erfolgen. Die Informationen zu einem Verhältnis der gezählten Körner je Zeiteinheit können in Echtzeit generiert werden, so dass die Informationen durchgehend über den Zeitverlauf Aussagen zum momentanen Ist-Verhältnis der gezählten Körner je Zeiteinheit bereitstellen.

Weiter ist vorgesehen, dass eine Zeitdifferenz gemessen und/oder festgestellt wird, welche das mittels des Luftstroms beförderte körnige Gut unmittelbar nach seiner Dosierung bzw. unmittelbar nach Verlassen der wenigstens einen Dosiereinheit zur Weiterleitung an den wenigstens einen Sensor benötigt. Die Zeitdifferenz kann in besonders bevorzugten Ausführungsformen, wie nachfolgend noch beschrieben, mittels einer Variation der Drehzahl der wenigstens einen Dosiereinheit bzw. des Dosierorgans festgestellt bzw. gemessen werden. Der Begriff "Zeitdifferenz" ist im Rahmen der vorliegenden Erfindung umfassend zu verstehen und kann daher auch ein Näherungswert über die Dauer sein, welchen dosiertes körniges Gut bis zur Weiterleitung bzw. bis zum Kontakt mit dem wenigstens einen Sensor benötigt.

Weiterhin ist es denkbar, dass eine auszubringende Soll-Anzahl an Körner des körnigen Gutes je Zeiteinheit vorgegeben werden kann. Die auszubringende Soll-Anzahl an Körner kann beispielsweise über eine Steuerungseinrichtung durch einen Benutzer vorgegeben werden und somit in einem Speicherbereich der Steuerungseinrichtung hinterlegt sein. Zudem kann eine automatische Vorgabe in Abhängigkeit einer Fahrt- bzw. Bewegungsgeschwindigkeit einer jeweiligen landwirtschaftlichen Verteilvorrichtung bzw. der wenigstens einen Dosiereinheit erfolgen.

Erfindungsgemäß werden eine Drehzahl bzw. Drehfrequenz der mindestens einen Dosiereinheit und/oder ein Volumen des über die mindestens eine Strömungserzeugungseinrichtung bereitzustellenden Luftstroms unter Berücksichtigung der Zeitdifferenz automatisch geregelt.

Die Praxis hat gezeigt, dass mittels des erfindungsgemäßen Verfahrens eine sehr genaue Ausbringung von körnigem Gut erfolgen kann, da die Regelung bei Berücksichtigung der Zeitdifferenz keinen ungewollten Schwankungen unterliegt. Außerdem neigt die vorgeschlagene Regelung nicht zum Überschwingen, so dass sie sehr robust regelt. Die dosierten Körner je Zeiteinheit entsprechen hierbei zumindest näherungsweise einem Soll-Verhältnis, so dass der Kornabstand und die Querverteilung zumindest weitgehend gleichbleibend eingehalten werden kann.

Für besonders bevorzugte Ausführungsformen kann vorgesehen sein, dass die Zeitdifferenz gemessen und/oder festgestellt wird, indem die wenigstens eine Dosiereinheit zeitlich aufeinander folgend mit unterschiedlicher Drehzahl betrieben wird, eine Zeitspanne bis zu einer bestimmten Änderung des Verhältnisses an gezählten Körnern je Zeiteinheit hierbei festgehalten wird und als Zeitdifferenz verwendet wird.

Weiterhin kann es sein, dass die wenigstens eine Dosiereinheit für eine Dauer von wenigstens etwa zwei Sekunden und vorzugsweise etwa fünf Sekunden mit einer ersten Drehzahl betrieben wird und aus dem Verhältnis an Körnern je Zeiteinheit über die Dauer ein arithmetischer Mittelwert des Verhältnisses erstellt wird. Zeitlich hierauf folgend kann die wenigstens eine Dosiereinheit mit einer zweiten Drehzahl betrieben werden. Bei einer bestimmten Abweichung des Verhältnisses an gezählten Körnern je Zeiteinheit vom arithmetischen Mittelwert kann ein Beginn der Zeitspanne festgesetzt werden. Ein Ende der Zeitspanne kann festgesetzt werden, sofern bzw. wenn das Verhältnis an Körnern je Zeiteinheit eine bestimmte Konstanz ausbildet. Die bestimmte Konstanz kann bis zum Festsetzen des Endes der Zeitspanne in regelmäßigen Abständen, beispielsweise in Intervallen von je 120 Millisekunden, überprüft werden. Die Intervalle können auch andere Abstände aufweisen, bspw. 200 Millisekunden oder mehr, ggf. auch 100 Millisekundne oder weniger.

Denkbar ist beispielsweise, dass die bestimmte Abweichung wenigstens dem 1,3-fachen und vorzugsweise dem 1,5-fachen des arithmetischen Mittelwertes entspricht. Leichte Schwankungen des Verhältnisses an Körnern je Zeiteinheit, welche auch bei konstanter Drehzahl der wenigstens einen Dosiereinheit vorliegen können, führen bei diesen Ausführungsformen nicht zu einer unbeabsichtigten Festsetzung des Beginns der Zeitspanne. Vielmehr wird die Zeitverzögerung erst dann ermittelt, wenn der Betrag des gezählten körnigen Gutes je Zeiteinheit einen bestimmten Wert überschreitet.

Weiter kann es sein, dass die wenigstens eine Dosiereinheit mittels einer Rotationsbewegung körniges Gut dosiert, wobei bei einer zweiten Drehzahl der wenigstens einen Dosiereinheit eine Rotationsfrequenz mindestens dem 1,5-fach und vorzugsweise dem Doppelten einer Rotationsfrequenz bei einer ersten Leistung entspricht. Beispielsweise kann wenigstens eine Dosiereinheit bei einer ersten Drehzahl mit 40 Umdrehungen in der Minute und bei der zweiten Drehzahl mit 80 Umdrehungen in der Minute rotieren. Insbesondere kann die wenigstens eine Dosiereinheit zuerst mit der ersten Drehzahl bzw. zuerst mit der geringeren Drehzahl und zeitlich hierauf folgend mit der zweiten Drehzahl bzw. der größeren Drehzahl betrieben werden.

Denkbar ist darüber hinaus, dass die Zeitdifferenz optisch ausgegeben bzw. mittels einer Anzeigeeinrichtung einem Benutzer visuell dargeboten wird. Ein Benutzer kann die Zeitdifferenz somit von der Anzeigeeinrichtung ablesen und optisch erkennen. Beispielsweise kann hierzu ein Display (d.h., die Anzeigeeinrichtung) vorgesehen sein, auf welchem die Zeitdifferenz bzw. ein Hinweis zur Zeitdifferenz optisch ausgegeben wird. Auch kann es sein, dass die automatische Regelung der wenigstens einen Dosiereinheit nach optischer Ausgabe der Zeitdifferenz einer manuellen Zustimmung bedarf. Die manuelle Zustimmung kann beispielsweise durch Bestätigung über ein Touchscreen (d.h., einen berührungsempfindlichen Bildschirm zur Eingabe) erfolgen.

Wie vorhergehend bereits erwähnt, kann es sein, dass die Soll-Anzahl an über die wenigstens eine Dosiereinheit zu dosierenden Körnern je Zeiteinheit und/oder ein Volumen des über die mindestens eine Strömungserzeugungseinrichtung bereitzustellenden Volumenstroms je Zeiteinheit in Abhängigkeit einer Ist-Geschwindigkeit vorgegeben wird, mit welcher die wenigstens eine Dosiereinheit bzw. eine jeweilige landwirtschaftliche Verteilvorrichtung über ein Arbeitsfeld bewegt wird. Die Ist-Geschwindigkeit kann beispielsweise sensorisch ermittelt werden, wobei die Soll-Anzahl an Körnern je Zeiteinheit zumindest näherungsweise in Echtzeit an die jeweilige Ist-Geschwindigkeit angepasst wird. Das Regeln der Leistung der wenigstens einen Dosiereinheit kann somit in Abhängigkeit der jeweiligen Ist-Geschwindigkeit zumindest näherungsweise in Echtzeit erfolgen.

Die Erfindung betrifft darüber hinaus eine Vorrichtung zum Vereinzeln bzw. Dosieren und Ausbringen von körnigem Gut. Die Vorrichtung umfasst wenigstens eine drehend antreibbare Dosiereinheit, über deren drehenden Antrieb körniges Gut dosiert werden kann. Zudem ein oder mehrere Austragungsorgane für das dosierte körnige Gut, die mit der wenigstens einen Dosiereinheit fluidisch in Verbindung stehen. Weiter wenigstens einen Sensor, der im Bereich eines Strömungspfades des dosierten körnigen Gutes angeordnet ist, so dass die dosierten Körner via den wenigstens einen Sensor vor ihrer Austragung gezählt werden können.

Bestandteil der Vorrichtung ist zudem wenigstens eine Strömungserzeugungseinrichtung. Diese kann einen Luftstrom für den Transport des dosierten körnigen Gutes in Richtung der ein oder mehreren Austragungsorgane bereitstellen. Zudem ist eine mit dem wenigstens einen Sensor der wenigstens einen Dosiereinheit und der wenigstens einen Strömungserzeugungseinrichtung in Verbindung stehende Steuerungseinrichtung vorgesehen, die zur selbständigen Regelung einer Drehzahl der wenigstens einen Dosiereinheit und/oder eines Volumens des über die wenigstens eine Strömungserzeugungseinrichtung bereitzustellenden Luftstroms unter Berücksichtigung nachfolgender Aspekte ausgebildet ist:
a) Eines Verhältnisses an über den wenigstens einen Sensor bzw. die wenigstens eine Sensoreinheit gezählten Körnern je Zeiteinheit sowie
b) Einer der Steuerungseinrichtung vorgegebenen, gemessenen und/oder festgestellten Zeitdifferenz (Δt), welche körniges Gut unmittelbar nach seiner Dosierung zur Weiterleitung an den wenigstens einen Sensor benötigt.

In besonders bevorzugten Ausführungsformen kann die Vorrichtung ein Display umfassen, welches an die Steuerungseinrichtung gekoppelt ist, so dass die Zeitdifferenz bzw. Informationen zur Zeitdifferenz über das Display optisch ausgegeben werden können.

Merkmale, welche vorhergehend zu denkbaren Ausführungsformen des erfindungsgemäßen Verfahrens erwähnt wurden, können ebenso bei denkbaren Ausführungsformen der erfindungsgemäßen Vorrichtung vorgesehen sein.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Ansicht einer Ausführungsform einer erfindungsgemäßen Vorrichtung und verdeutlicht Schritte, wie sie bei diversen Ausführungsformen des erfindungsgemäßen Verfahrens vorliegen können.
Fig. 2 verdeutlicht anhand eines schematischen Diagramms eine mögliche Umsetzung einer Ausführungsform des erfindungsgemäßen Verfahrens.

Der Übersicht halber sind nur solche Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

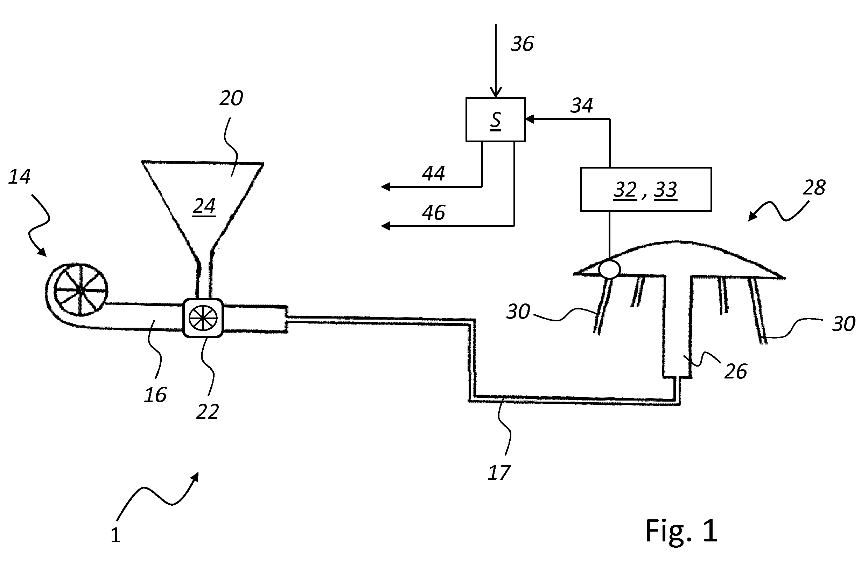

Die schematische Darstellung der Fig. 1 verdeutlicht eine Ausführungsform einer erfindungsgemäßen Vorrichtung 1 und verdeutlicht zudem Schritte, wie sie bei diversen Ausführungsformen des erfindungsgemäßen Verfahrens vorliegen können. Die Vorrichtung 1 umfasst eine Strömungserzeugungseinrichtung 14, welche beispielsweise als Radialgebläse ausgebildet sein kann und einen Luftstrom über eine fluidische Verbindung 16 bzw. Leitung in Richtung eines Kornabgabebereichs einer Dosiereinheit 22 transportiert. Über die Dosiereinheit 22 dosiertes körniges Gut kann somit über den Luftstrom transportiert werden. Zwar ist vorliegend leidglich eine Dosiereinheit 22 dargestellt, jedoch können in weiteren denkbaren Ausführungsformen auch mehrere Dosiereinheiten 22 vorgesehen sein, die jeweils körniges Gut 24 dosieren.

Weiter umfasst die Vorrichtung 1 einen Speicher 20 für körniges Gut 24, wobei körniges Gut 24 vom Speicher 20 in die Dosiereinheit 22 eingebracht wird, um das körnige Gut 24 mittels der Dosiereinheit 22 zu dosieren. Über einen Leitungsabschnitt 17 ist die Dosiereinheit 22 an eine Steigleitung 26 gekoppelt, welche der zentralen Verteileinheit 28 das dosierte körnige Gut zuführt. Der Luftstrom, welcher über die Strömungserzeugungseinrichtung 14 bereitgestellt wird, transportiert somit das dosierte körnige Gut in Richtung der zentralen Verteileinheit 28.

Die zentrale Verteileinheit 28 lenkt den Luftstrom und das damit transportierte und dosierte körnige Gut 24 um und führt den Luftstrom mitsamt dem dosierten körnigen Gut 24 an mehrere Verbindungsleitungen 30 weiter, die mit Säscharen oder weiteren in den Figuren vorliegender Beschreibung nicht mit dargestellten Ausbringeinrichtungen in Verbindung stehen.

Weiterhin ist in Fig. 1 ein im Bereich der zentralen Verteileinheit 28 bzw. an Übergängen zu den Leitungen 30 angeordneter Sensor 32 schematisch angedeutet, der insbesondere als Prallsensor 33 ausgebildet ist und mit einer Steuerungseinrichtung S in Verbindung steht. Über den Sensor 32 können Körner des dosierten körnigen Gutes gezählt werden. In Fig. 1 ist der Sensor 32 bzw. Prallsensor 33 der zentralen Verteileinheit 28 zugeordnet, wobei Körner, welche in die zentrale Verteileinheit 28 über die Steigleitung 26 eintreten, durch den Sensor 32 bzw. Prallsensor 33 gezählt werden können. In denkbaren weiteren Ausführungsformen können auch jeder oder mehreren der Verbindungsleitungen 30 jeweils ein oder mehrere eigene Sensoren zugeordnet sein, um einzelne Körner, welche die jeweilige Verbindungleitung 30 passieren, zu zählen.

Wenn im vorliegenden Zusammenhang von einem Sensor 32 bzw. von einem Prallsensor 33 die Rede ist, so sind diese Begriffe grundsätzlich austauschbar. D.h., mit dem Begriff des Sensors 32 kann immer auch der Prallsensor 33 gemeint sein. Umgekehrt kann mit dem Begriff des Prallsensors 33 immer auch der Sensor 32 gemeint sein.

Der Sensor 32 bzw. Prallsensor 33 liefert Ausgangssignale 34 zu den gezählten Körnern des dosierten Gutes 24 an die Steuerungseinrichtung S. Die Steuerungseinrichtung S ist mittels der Ausgangssignale 34 in der Lage, Informationen zur Anzahl der über den Sensor 32 gezählten Körner je Zeiteinheit zu generieren.

Die Steuerungseinrichtung S regelt eine Drehzahl der Dosiereinheit 22 sodann automatisch, wobei bei Regelung der Drehzahl die Informationen zu den über den Sensor 32 gezählten Körnern je Zeiteinheit berücksichtigt werden. Hierzu kann die Steuerungseinrichtung S eine oder mehrere Stellgrößen 44, 46 ausgeben, mittels welcher die Dosiereinheit 22 und/oder die Strömungserzeugungseinrichtung 14 derart gesteuert und/oder geregelt werden, dass mittels des via die Strömungserzeugungseinrichtung 14 erzeugten Luftvolumens je Zeiteinheit und/oder der Menge pro Zeiteinheit des via die Dosiereinheit 22 dosierten körnigen Gutes eine Soll-Menge an Körnern je Zeiteinheit durch die Vorrichtung 1 ausgebracht werden kann.

Beispielsweise kann es sein, dass die Dosiereinheit 22 eine bestimmte Menge an Körnern je Zeiteinheit dosiert. Ist die über den Sensor 32 gezählte Menge an Körnern je Zeiteinheit zu gering, bzw. weicht das Verhältnis nach unten von einem vorbestimmten Soll-Verhältnis ab, so kann die Strömungserzeugungseinrichtung 14 zur Vergrößerung eines bereitgestellten Volumens des Luftvolumenstroms mittels einer oder mehrerer Stellgrößen 44 bzw. 46 angesteuert werden. Weiter kann hierbei die Dosiereinheit 22 zur Erhöhung ihrer Drehfrequenz angesteuert werden, so dass ein größerer Betrag des körnigen Gutes 24 je Zeiteinheit mittels der Dosiereinheit 22 dosiert wird.

Zur Vorgabe der Stellgrößen 44 bzw. 46 werden von der Steuerungseinrichtung S weitere Aspekte berücksichtigt. So erreicht die Steuerungseinrichtung S ein Eingangssignal 36, mittels welches Eingangssignals 36 die Steuerungseinrichtung S eine Soll-Ausbringungsmenge festlegt. Über das Eingangssignal 36 wird die Steuerungseinrichtung S über eine Ist-Geschwindigkeit der Vorrichtung 1 informiert. Die ein oder mehreren Stellgrößen 44 bzw. 46 sind daher abhängig von einer Geschwindigkeit, mit der sich die Vorrichtung 1 aktuell bewegt. Bei höherer Geschwindigkeit der Vorrichtung 1 wird eine Drehzahl der Dosiereinheit 22 derart geregelt, dass eine größere Menge an Körnern je Zeiteinheit dosiert wird als bei geringerer Geschwindigkeit. Die Strömungserzeugungseinrichtung 14 kann hierzu, wie vorhergehend bereits erwähnt, mittels der ein oder mehreren Stellgrößen 44 bzw. 46 entsprechend angesteuert werden.

Wie in Fig. 1 weiterhin zu erkennen, ist der Sensor 32 beabstandet zur Dosiereinheit 22. Die dosierten Körner müssen zunächst den Leitungsabschnitt 17 und die Steigleitung 26 passieren, bis diese den Sensor 32 erreichen. Das Dosieren der Körner über die Dosiereinheit 22 und das Zählen der Körner über den Sensor 32 erfolgen daher zeitlich nicht unmittelbar aufeinander, woraus eine ungenaue Regelung der Drehzahl der Dosiereinheit 22 sowie des über die Strömungserzeugungseinrichtung 14 bereitgestellten Luftstroms über die Steuerungseinrichtung S resultiert.

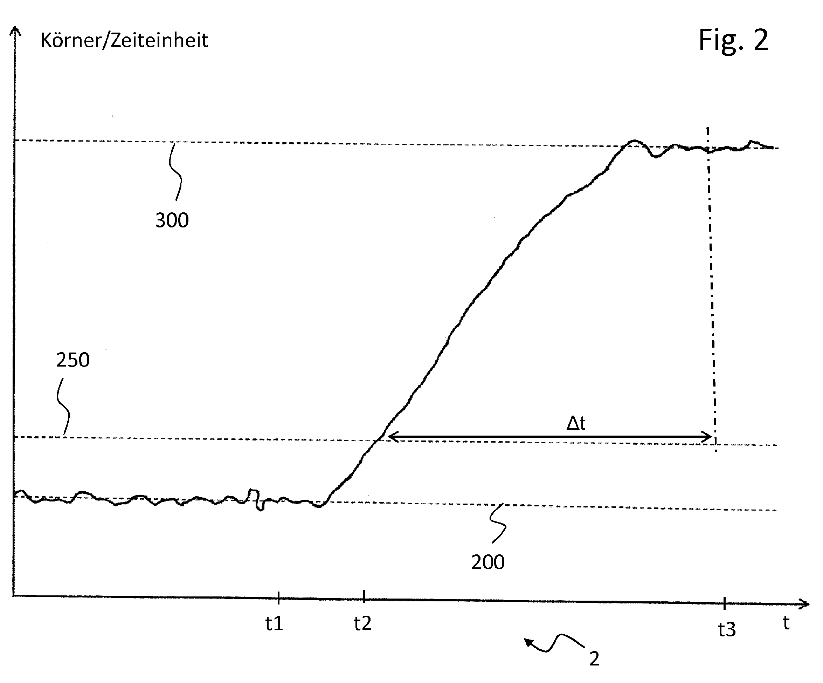

Aus diesem Grunde berücksichtigt die Steuerungseinrichtung S zum automatischen Regeln der Dosiereinheit 22 und der Strömungserzeugungseinrichtung 14 bzw. bei Ausgabe der ein oder mehreren Stellgrößen 44 bzw. 46 eine Zeitdifferenz Δt, welche körniges Gut 24 unmittelbar nach seiner Dosierung bzw. Abgabe zur Weiterleitung an den Sensor 32 benötigt. Eine Möglichkeit, die Zeitdifferenz Δt zu messen bzw. festzustellen, ist für eine Ausführungsform des erfindungsgemäßen Verfahrens in Fig. 2 vorliegender Patentanmeldung dargestellt und nachfolgend erläutert.

Das Diagramm der Fig. 2 verdeutlicht in schematischer Weise eine Umsetzung einer Ausführungsform des erfindungsgemäßen Verfahrens 2. Das Verfahren ist vorgesehen zum Ausbringen von körnigem Gut 24 und kann bei einer Vorrichtung 1 gemäß Fig. 1 Verwendung finden.

Zur Umsetzung der Ausführungsform des Verfahrens 2 gemäß Fig. 2 ist eine Dosiereinheit 22 (vgl. Figur 1 vorgesehen) vorgesehen, die angetrieben wird und hierbei körniges Gut 24 dosiert. Anschließend wird das dosierte körnige Gut an einen Sensor 32 weitergeleitet, welcher das körnige Gut zählt. Hierauf folgend wird das dosierte und gezählte körnige Gut ausgebracht.

Der Sensor 32 steht mit der Steuerungseinrichtung S in Verbindung, welche aus den über den Sensor 32 gezählten Körnern Informationen zu den gezählten Körnern je Zeiteinheit generiert. In Fig. 2 sind die Informationen zu den gezählten Körnern je Zeiteinheit über den Zeitverlauf aufgetragen.

Wie unter Bezugnahme auf Fig. 1 bereits erwähnt, soll im Rahmen des Verfahrens eine Zeitdifferenz festgestellt und/oder gemessen werden, welche körniges Gut 24 unmittelbar nach seiner Dosierung bzw. Abgabe zur Weiterleitung an den Sensor 32 benötigt, um hiermit die Drehzahl der Dosiereinheit 22 und die Strömungserzeugungseinrichtung 14 genau zu regeln und eine optimierte Kornausbringung mit zumindest weitgehend gleichbleibendem Kornabstand und Querverteilung zu erhalten.

Hierzu wird die Dosiereinheit 22 bis zum auf der Abszisse aufgetragenen Zeitpunkt t1 mit einer ersten Drehzahl betrieben. Beispielsweise kann die Dosiereinheit 22 zum Zwecke der Vereinzelung ein rotierendes Dosierorgan umfassen, wobei das Dosierorgan bei erster Drehzahl mit 40 Umdrehungen in der Minute rotiert. Die Menge an dosierten bzw. gezählten Körnern je Zeiteinheit sind in Fig. 2 dargestellt, wobei Ziffer 200 auf einen Mittelwert des Verhältnisses an gezählten bzw. dosierten Körnern je Zeiteinheit bis zum Zeitpunkt t1 verweist. Die Dauer bis zum ersten Zeitpunkt t1 kann wenigstens zwei Sekunden und vorzugsweise 5 Sekunden betragen, um einen aussagekräftigen Mittelwert zu erhalten, da das Verhältnis an dosierten bzw. gezählten Körnern je Zeiteinheit, wie in Fig. 2 zu erkennen, über den Zeitverlauf Schwankungen unterliegt bzw. nicht konstant ist.

Ist der Mittelwert 200 bekannt, so wird ein Referenzwert 250 durch eine Multiplikation des Mittelwertes mit einem Faktor von wenigstens 1,2 und vorzugsweise 1,5 gebildet. Weiter wird direkt ab dem Zeitpunkt t1 die Dosiereinheit 22 mit einer zweiten Drehzahl betrieben. Bei zweiter Drehzahl kann das Dosierorgan der Dosiereinheit 22 mit einer Frequenz von 80 Umdrehungen pro Minute rotieren. Ab Betrieb der Dosiereinheit 22 mit zweiter Drehzahl bzw. ab einer gewissen Dauer nach Betrieb der Dosiereinheit 22 mit zweiter Drehzahl steigt das Verhältnis an gezählten bzw. dosierten Körnern je Zeiteinheit sukzessive an, bis das Verhältnis an gezählten bzw. dosierten Körnern je Zeiteinheit zum Zeitpunkt t2 gegenüber dem Referenzwert 250 vergrößert ausgebildet ist. Ab diesem Zeitpunkt t2 wird ein Beginn der für das erfindungsgemäße Verfahren zu ermittelnden Zeitdifferenz Δt bzw. Zeitspanne festgesetzt. Ausgehend vom Zeitpunkt t2 nimmt das Verhältnis an gezählten bzw. dosierten Körnern je Zeiteinheit weiterhin zu, bis sich zum Zeitpunkt t3 eine gewisse Konstanz des Verhältnisses einpendelt. Zum Zeitpunkt t3 wird sodann das Ende der Zeitdifferenz Δt bzw. Zeitspanne festgesetzt. Der arithmetische Mittelwert an gezählten Körnern je Zeiteinheit bei zweiter Drehzahl der Dosiereinheit 22 ist unter Verweis mit Ziffer 300 in Fig. 2 angedeutet.

Die Zeitdifferenz Δt wird von der Steuerungseinrichtung S (vgl. Fig. 1) berücksichtigt, welche hiermit ggf. ein oder mehrere Stellgrößen 44 bzw. 46, wie zu Fig. 1 beschrieben, erstellt, um die Drehzahl der Dosiereinheit 22 und die Strömungserzeugungseinrichtung 14 automatisch zu regeln.

Denkbar ist darüber hinaus, dass die Zeitdifferenz Δt optisch ausgegeben bzw. auf einer Anzeigeeinrichtung wie einem Bildschirm dargestellt wird, worauf eine Zustimmung durch einen Benutzer erfolgen muss, um mit der automatischen Regelung durch die Steuerungseinrichtung S zu beginnen. Die Eingabe bzw. Zustimmung kann beispielsweise mittels eines Touchscreen (berührungsempfindlicher Bildschirm zur Anzeige und/oder Eingabe von Steuerbefehlen) erfolgen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Vorrichtung
- 2: Verfahren
- 14: Strömungserzeugungseinrichtung
- 16: Verbindung
- 17: Leitungsabschnitt
- 20: Speicher
- 22: Dosiereinheit
- 24: Körniges Gut
- 26: Steigleitung
- 28: Zentrale Verteileinheit
- 30: Verbindungsleitung
- 32: Sensor
- 33: Prallsensor
- 34: Ausgangssignal
- 36: Eingangssignal
- 44: Stellgröße
- 46: Stellgröße
- 200: Mittelwert (Erste Leistung)
- 250: Referenzwert
- 300: Mittelwert (Zweite Leistung)

- S: Steuerungseinrichtung
- t1: Zeitpunkt
- t2: Zeitpunkt
- t3: Zeitpunkt
- Δt: Zeitdifferenz

## Patentansprüche

1. Verfahren (2) zum Dosieren und Ausbringen von körnigem Gut (24), umfassend zumindest die folgenden Schritte:
- drehendes Antreiben mindestens einer Dosiereinheit (22), welche hieraus resultierend körniges Gut (24) dosiert,
- Erzeugen und/oder Bereitstellen eines Luftstroms durch mindestens eine Strömungserzeugungseinrichtung (14) und Weiterleiten des körnigen Guts (24) mittels des Luftstroms zu wenigstens einem Sensor (32) bzw. in einen Erfassungsbereich wenigstens eines Sensors (32), welcher Sensor (32) Körner des dosierten Gutes (24) zählt und entsprechende Ausgangssignale (34) generiert,
- Ausbringen des dosierten und gezählten körnigen Gutes (24), **dadurch gekennzeichnet, dass**
- eine Zeitdifferenz (Δt), welche körniges Gut (24) unmittelbar nach seiner Dosierung zur Weiterleitung an den wenigstens einen Sensor (32) benötigt, festgestellt und/oder gemessen wird, wobei
eine Drehzahl der mindestens einen Dosiereinheit (22) und/oder ein Volumen des über die mindestens Strömungserzeugungseinrichtung (14) bereitzustellenden Luftstroms unter Berücksichtigung der Zeitdifferenz (Δt) automatisch geregelt wird bzw. werden.

2. Verfahren nach Anspruch 1, bei dem die Zeitdifferenz (Δt) gemessen und/oder festgestellt wird, indem die mindestens eine Dosiereinheit (22) zeitlich aufeinander folgend mit unterschiedlichen Drehzahlen betrieben wird, eine Zeitspanne bis zu einer bestimmten Änderung des Verhältnisses an gezählten Körnern je Zeiteinheit hierbei festgehalten wird und als Zeitdifferenz (Δt) verwendet wird.

3. Verfahren nach Anspruch 2, bei welchem
- die mindestens eine Dosiereinheit (22) für eine Dauer von wenigstens etwa zwei Sekunden und vorzugsweise etwa fünf Sekunden mit einer ersten Drehzahl betrieben wird und aus dem Verhältnis an Körnern, welche den wenigstens einen Sensor (32) je Zeiteinheit passieren, über die Dauer ein arithmetischer Mittelwert (200) des Verhältnisses erstellt wird;
- zeitlich hierauf folgend die mindestens eine Dosiereinheit (22) mit einer zweiten Drehzahl betrieben wird,
- bei bestimmter Abweichung des Verhältnisses an gezählten Körnern je Zeiteinheit vom arithmetischen Mittelwert (200) ein Beginn der Zeitspanne festgesetzt wird und
- ein Ende der Zeitspanne festgesetzt wird, sofern bzw. sobald das Verhältnis an Körnern je Zeiteinheit eine bestimmte bzw. definierbare Konstanz zeigt bzw. ausbildet.

4. Verfahren nach Anspruch 3, bei welchem die bestimmte Abweichung wenigstens dem 1,3-fachen und vorzugsweise dem 1,5-fachen des arithmetischen Mittelwertes (200) entspricht.

5. Verfahren nach einem oder mehreren der Ansprüche 2 bis 4, bei welchem die wenigstens eine Dosiereinheit (22) mittels einer drehenden Bewegung einer Vereinzelungsscheibe und/oder eines Dosierorgans körniges Gut (24) dosiert, wobei bei einer zweiten Drehzahl eine Rotationsfrequenz der Vereinzelungsscheibe und/oder des Dosierorgans mindestens dem 1,5-fachen und vorzugsweise dem Doppelten einer Rotationsfrequenz bei einer ersten Drehzahl entspricht.

6. Verfahren nach Anspruch 5, bei dem die wenigstens eine Dosiereinheit (22) zunächst mit der ersten Drehzahl betrieben wird, und bei dem die Dosiereinheit (22) zeitlich hierauf folgend mit der zweiten Drehzahl betrieben wird.

7. Verfahren nach einem oder mehreren der Ansprüche 1 bis 6, bei dem die Zeitdifferenz (Δt) optisch ausgegeben bzw. mittels einer Anzeigeeinrichtung dargestellt wird.

8. Verfahren nach Anspruch 7, bei dem die automatische Regelung nach optischer Ausgabe der Zeitdifferenz (Δt) einer manuellen Zustimmung bedarf.

9. Vorrichtung (1) zum Dosieren und Ausbringen von körnigem Gut (24), aufweisend zumindest:
- wenigstens eine Dosiereinheit (22), über deren drehenden Antrieb körniges Gut (24) dosiert werden kann,
- ein Austragungsorgan oder mehrere Austragungsorgane für das körnige Gut (24), die mit der wenigstens einen Dosiereinheit (22) fluidisch in Verbindung stehen,
- wenigstens einen Sensor (32), der im Bereich eines Strömungspfades des dosierten körnigen Gutes (24) angeordnet ist, so dass die dosierten Körner mittels des wenigstens einen Sensors (32) vor ihrer Austragung sensorisch erfasst und gezählt werden können,
- wenigstens eine Strömungserzeugungseinrichtung zur Bereitstellung eines für den Transport des dosierten körnigen Gutes (24) in Richtung des Austragungsorgans oder der mehreren Austragungsorgane jeweils vorgesehenen Volumenstroms,
- eine mit dem wenigstens einen Sensor (32), der wenigstens einen Dosiereinheit (22) und der wenigstens einen Strömungserzeugungseinrichtung (14) in Verbindung stehende Steuerungseinrichtung (S), die zur selbständigen Regelung einer Drehzahl der wenigstens einen Dosiereinheit (22) und/oder eines Volumens des über die wenigstens eine Strömungserzeugungseinrichtung (14) bereitzustellenden Luftstroms unter Berücksichtigung nachfolgender Aspekte ausgebildet ist:
a) eines Verhältnisses an über den wenigstens einen Sensor (32) gezählten Körnern je Zeiteinheit sowie
b) einer der Steuerungseinrichtung (S) vorgegebenen, gemessenen und/oder festgestellten Zeitdifferenz (Δt), welche körniges Gut (24) unmittelbar nach seiner Vereinzelung zur Weiterleitung an den wenigstens einen Sensor (32) benötigt.

10. Vorrichtung nach Anspruch 9, umfassend ein Display, welches an die Steuerungseinrichtung (S) gekoppelt ist, so dass die Zeitdifferenz (Δt) über das Display optisch ausgegeben werden kann.
